(19) Europäisches Patentamt
European Patent Office
Office européen des brevets

(11) **EP 3 939 690 A1**

(12) **EUROPEAN PATENT APPLICATION**

(43) Date of publication:
**19.01.2022 Bulletin 2022/03**

(21) Application number: **21020365.9**

(22) Date of filing: **13.07.2021**

(51) International Patent Classification (IPC):
**B01D 53/86** (2006.01)  **B01D 53/94** (2006.01)
**B01J 23/10** (2006.01)  **F01N 3/10** (2006.01)

(52) Cooperative Patent Classification (CPC):
**B01D 53/8637; B01D 53/94; B01J 23/10;**
**F01N 3/0814; F01N 3/085; F01N 3/2828;**
B01D 2255/2065; B01D 2255/40; B01D 2257/302;
F01N 2330/06; F01N 2370/04; F01N 2570/04;
F01N 2570/10; F01N 2570/12; F01N 2570/14

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.07.2020  GR 20200100409**

(71) Applicant: **MONOLITHOS Catalysts & Recycling Ltd**
**11476 Athens (GR)**

(72) Inventors:
• YAKOUMIS, Iakovos
  Athens 11142 (GR)
• SAKKAS, Konstantinos Maltiadis
  Mesogaia Attica 19003 (GR)
• MOSCHOVI, Anastasia Maria
  Athens 17342 (GR)

(54) **METHOD, DEVICE AND PROCESS FOR THE ABATEMENT OF SO2 EMISSIONS FROM INTERNAL COMBUSTION ENGINES**

(57)  The exhaust gases emitted from internal combustion engines using fuels with high sulfur content are characterized by high concentration of sulfur dioxide ($SO_2$). Major environmental problems can arise from its uncontrolled release to the environment as $SO_2$ is responsible for the production of sulfuric acid in the atmosphere and the presence of the acid rain phenomenon. Recent relevant legislation in shipping will impose drastic reduction of $SO_2$ emissions in all ships up to 85%. In the present patent application, a catalytic conversion method of $SO_2$ emissions from internal combustion engines to elemental sulfur is presented, utilizing the carbon monoxide, hydrocarbons and nitrogen oxides from internal combustion engines, using catalytic converters similar to the ones used extensively in the automotive industry for the treatment of gasoline engines' exhaust gases. The process and the device that converts the sulfur dioxide to elemental sulfur in the flue gas stream by applying the above method are described in the present patent application. This procedure involves the installation of the device at the engine's exhaust stream at an appropriate temperature, in series with a microparticle filter, to effectively treat all toxic gaseous pollutants.

Figure 5

EP 3 939 690 A1

**Description**

The present invention refers to a method, system and device for the abatement of sulfur dioxide ($SO_2$) emissions and the conversion to elemental sulfur, from gaseous internal combustion engines that use high sulfur content fuel in vehicles, watercraft, power generation machinery or system, or exhaust gases from industrial processes.

Due to the lubricating action but also the low cost of high sulfur content fuels, many internal combustion engines continue to use them until today. However, relevant environmental legislation has already set strict limits on $SO_2$ emissions in the atmosphere for many applications. This leads to the development and evolution of sulfur dioxide emissions handling technologies, allowing for using the same fuel in internal combustion engines, thus avoiding a large fixed cost for the necessary conversions to the internal combustion engines. A typical example is the utilization of heavy oil (Heavy Fuel Oil, HFO) with -3.5% by weight sulfur content in shipping, and the $SO_2$ emissions limits of the relevant legislation that correspond to theoretical fuel use with -0.5% by weight sulfur content. So far, several exhaust gas cleaning systems have been proposed, including ones known as scrubbers for the production of sulfuric acid, periodic sorption/desorption systems on adsorbents, and systems for the injection of reductive agents such as urea/ammonia. However, the above exhaust gas treatment systems have not been widely utilized in the shipping sector due to the high fixed costs, large installation size and complicated function, associated with them. Systems similar to the aforementioned have been reported in the literature for the treatment of $SO_2$ in flue gas streams, but failed to sufficiently describe both the conversion of $SO_2$ to elemental sulfur and the application methodology towards the exhaust gases of internal combustion engines that use sulfur containing fuels.

In U.S. Patent No. 4,650, 782 [1] entitled "Lead tolerant catalyst for treating exhaust gas in the presence of $SO_2$ ", the inventor describes a catalytic monolith for the oxidation of the exhaust gases containing lead and the corresponding method with the use of transition metal catalysts and one thin film of $TiO_2$, which prevents the catalyst from being poisoned from lead and $SO_2$.

In U.S. Patent Application No. 8,821,818 B1 [2] entitled "Cleaning stack gas ", the inventor describes a method and apparatus for the treatment of $CO_x$, $SO_x$ and $NO_x$ containing exhaust stack gases, resulting either from the combustion of either coal, or natural gas or propane, or from the cement production process using zeolite catalysts with sodium and calcium cations. The use of different sizes of catalytic particles for each of the three aforementioned pollutants is proposed. Furthermore, the periodic use of nitrogen flow over the catalyst for the regeneration of the catalyst and the removal of adsorbed gases, solids and liquids is recommended.

In U.S. Patent Application No. US 3, 755, 550 [3] entitled "Process for reduction of $SO_2$", the inventor describes a process for the reduction of $SO_2$ combined with a gas stream containing reducing gas, which has resulted from the reforming of hydrocarbons and the use of a supported catalyst. In this case, the reaction of $SO_2$ with $H_2$ from the reforming to the formation of hydrogen sulfide is suggested. However, the inventor does not describe the direct use of the catalytic technology in a gas stream where the $SO_2$ already exists, but in a gas stream resulting from the combination of two gas streams. Furthermore, the inventor does not describe neither the use of monolithic catalysts, nor the use in a gas stream in internal combustion engines, nor the use in a gas stream where $O_2$ or/and NO exist.

In U.S. Patent No. 3, 931, 393 [4] entitled "Catalytic process for removing sulfur dioxide from gas streams", the inventor describes a process for the reduction of $SO_2$ in gas streams to elemental sulfur using a reductive gas, such as $H_2$ or/and CO which either already exists or is added later, and a catalyst following the formula $xLa_2O_3$ . $yCo_2O_3$, where x and y vary independently in the range of 1 to 3. The inventor restrains the patent in the use of this specific family unsupported catalysts / oxide mixtures and also in a stream where $H_2$ and CO are sufficient for the reduction of $SO_2$, which excludes the exhaust gases of an internal combustion engine, which on one hand uses sulfur containing fuel and on the other hand $H_2$ does not exist in exhaust gases.

In US patent No. 5,853,684 [5] entitled "Catalytic removals of sulfur dioxide from flue gas", the inventor describes a process for the simultaneous removal of $SO_2$ and NOx from flue gases, by the simultaneous reduction of $SO_2$ to elemental sulphur and NOx to $N_2$, using CO or $H_2$ are reducing gases which either already exists or is added later, and a catalyst following the general formula Ln-M-S-O, where Ln is an rare earth element, M can be selected from a given list of transition metals, S is sulphur and O is oxygen which required pretreatment before using. The inventor claims that the H2 source can be ammonia, light hydrocarbons or water-shift reaction, restraining the use in the exhaust gases.

The selective catalytic abatement / reduction of nitrogen oxide ($NO_x$) emissions in the exhaust gasses of lean internal combustion engines (diesel engines), in which there is high oxygen efficiency ($O_2$), is of great technological interest. The noble catalysts used for the treatment of gasoline exhaust gases present high activity of the above-mentioned reaction; however, they are poisoned by the strongly adsorbed oxygen under high oxygen excess conditions. Although, several research studies have been applied for the development of $NO_x$ reduction catalysts with high resistance to high excess of oxygen, practical applications have not been presented yet. As a result, large $NO_x$ quantities are released to the atmosphere from lean internal combustion engines, putting their commercial future at risk.

Recently, the application of scrubbers' technology that uses sea water has been introduced in the treatment of marine exhaust gases, where sulfuric acid is produced. Even though $SO_2$ is adsorbed and reduced efficiently, the produced sulfuric acid creates significant negative environmental effects, and the large installation size and the high fixed cost associated with the scrubbers, indicate a shift rather than a real solution of the problem. The selection of ammonium injection and the use of the corresponding catalytic converter has been proposed. However, it is possible that detectable traces of ammonia emissions with significant environmental and pathological effects to be detected.

**Introduction**

The catalytic conversion of $SO_2$ in the exhaust gases of internal combustion engines to elemental sulfur utilizing the CO, hydrocarbons and nitrogen oxides present in the exhaust gases of internal combustion engines using catalytic converters is presented in the present application patent. In this way, the internal combustion engines operating by using high sulfur content fuels (e.g., 3.5 wt%) will be able to operate without polluting the environment with $SO_2$. At the same time, the reduction of other toxic gaseous pollutants, carbon monoxide (CO), hydrocarbons and nitrogen oxides ($NO_x$) is also achieved. The produced elemental sulfur is collected and stored in solid form, while it is also a valuable commercial product for the sulfuric acid and fertilizers production industry.

**Method for the reduction of $SO_2$ from flue gas stream**

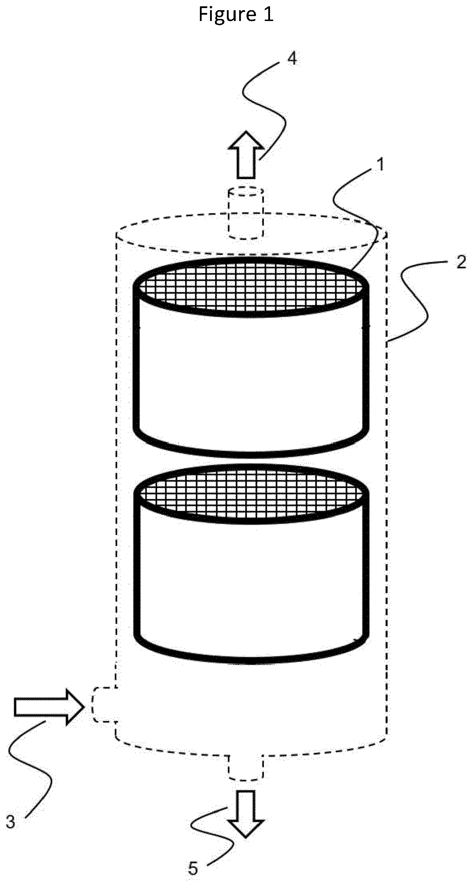

In the present invention, the catalytic reduction of sulfur dioxide ($SO_2$) emissions, contained in the exhaust gases of internal combustion engines using high sulfur content fuels, to elemental sulfur is described. The application field covers heavy duty vehicles, watercrafts, and power generation machinery or systems. The use of catalytic converters that catalyze the reactions of $SO_2$ with CO, $CH_4$, and NO for the production of elemental sulfur in liquid form in the temperature range from 200°C to 700°C is proposed. In parallel, $CO_2$, $H_2O$ and $N_2$ are produced. A schematic representation of the catalytic converter is shown in Figure 1, where the ceramic monolithic catalysts and the metallic flow handling cover in parts **1** and **2,** respectively are presented.

The monolithic catalyst consists of the heterogeneous catalyst which is deposited on the walls of the monolithic matrix. The monolithic matrix can be either ceramic or metallic. The ceramic matrix can be produced by at least one metal oxide selected from the oxide list: magnesium (Mg), aluminum (Al), silicon (Si), iron (Fe), zirconium (Zr), cerium (Ce), yttrium (Y), lanthanum (La), titanium (Ti), gadolinium (Gd), manganese (Mn), niobium (Nb). The metallic matrix can be made from at least one material selected from the list: steel, stainless steel, titanium or any other similar material.

The heterogeneous catalyst is consisted of the metal phase in a proportion of 0.5% To 20% by weight and the ceramic phase - carrier. The metal phase is consisted of at least one metal selected from the list: copper (Cu), iron (Fe), molybdenum (Mo), cobalt (Co), rhodium (Rh), iridium (Ir), ruthenium (Ru), palladium (Pd), nickel (Ni), tungsten (W), vanadium (V), tin (Sn), zinc (Zn), antimony (Sb) and manganese (Mn). The metal phase, which can also be in sulphate form, is supported on the surface of the porous ceramic phase. The ceramic phase is consisted of $CeO_2$ enhanced, stabilized, combined or mixed with at least one of the oxides of Y, Pr, Sr, Sc, La, Ti, Zr, Gd, Nb, V, Sm, Nd or/and Tb. The above metal oxides present redox properties at temperatures >200°C, thus contributing positively to the overall apparent activity of the catalyst.

For the sake of performance, arrays of the above structural-elemental monolithic catalysts can be used. In Figure 1, an example of two cylindrical monolithic catalysts in a row and in contact flow is presented.

The array system of multiple monolithic catalysts for the reduction of $SO_2$ can be sealed in a metallic or ceramic or other non-flammable housing for flow handling. Also, at the bottom of the device of Figure 1 a drain is present for the collection and handling of the liquid elemental sulfur.

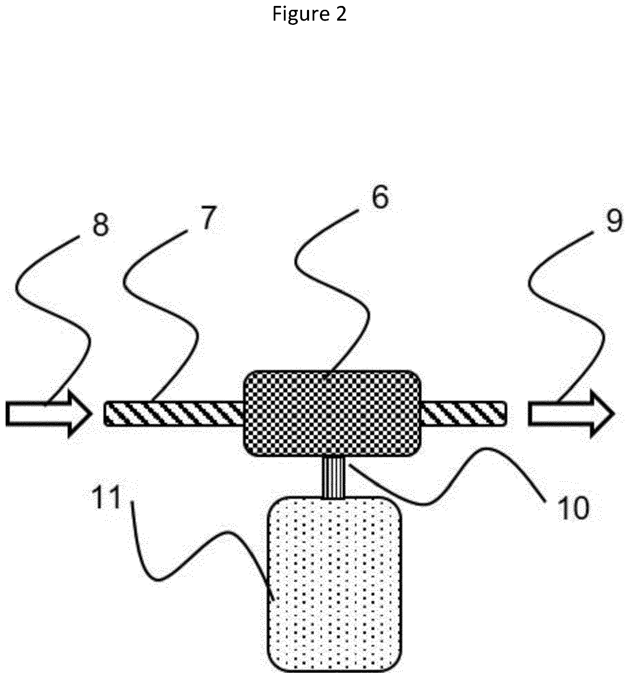

Otherwise, as shown in Figure 2, the monolithic catalysts system **6** for the reduction of $SO_2$ can be in contact flow with a collecting vessel of the produced S **11** with inlet **10.**

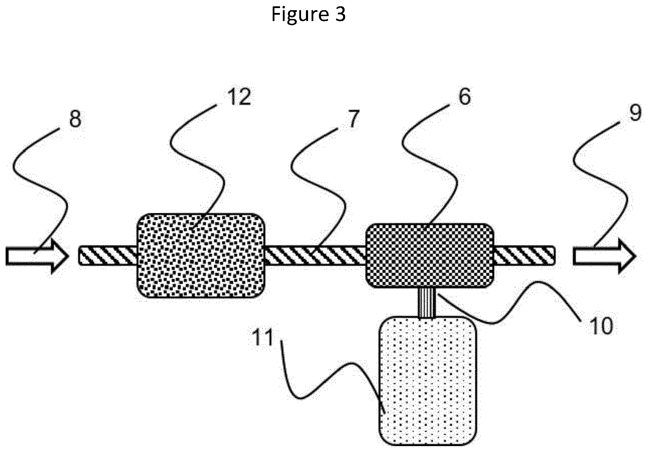

Otherwise, as shown in Figure 3, the monolithic catalysts system **6** for the reduction of $SO_2$ can be in contact flow with a carbon nanoparticle filter **12,** installed in the flue gas stream **7** upstream of the monolithic catalysts system **6,** in a such way that the reduction of the number of carbon nanoparticles in the flue gas stream **7** is possible .

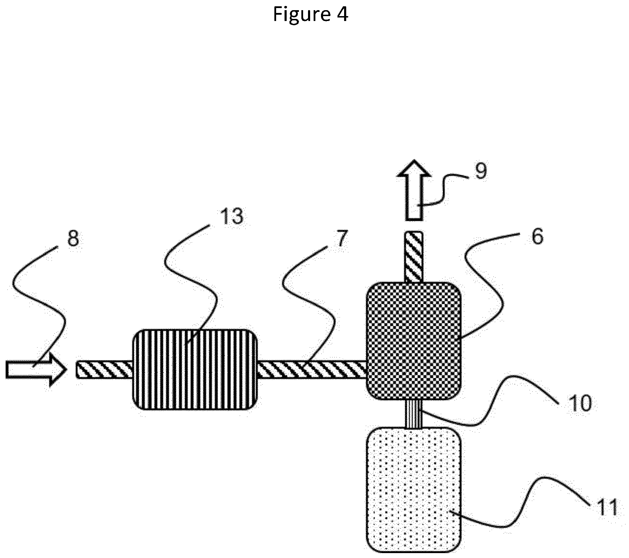

Otherwise, as shown in Figure 4, the monolithic catalysts system **6** for the reduction of $SO_2$ can be in contact flow with an oxygen removal system **13,** installed in the flue gas stream **7** upstream of the monolithic catalysts system **6,** in a such way that enables the reduction of the oxygen content in the flue gas stream **7.**

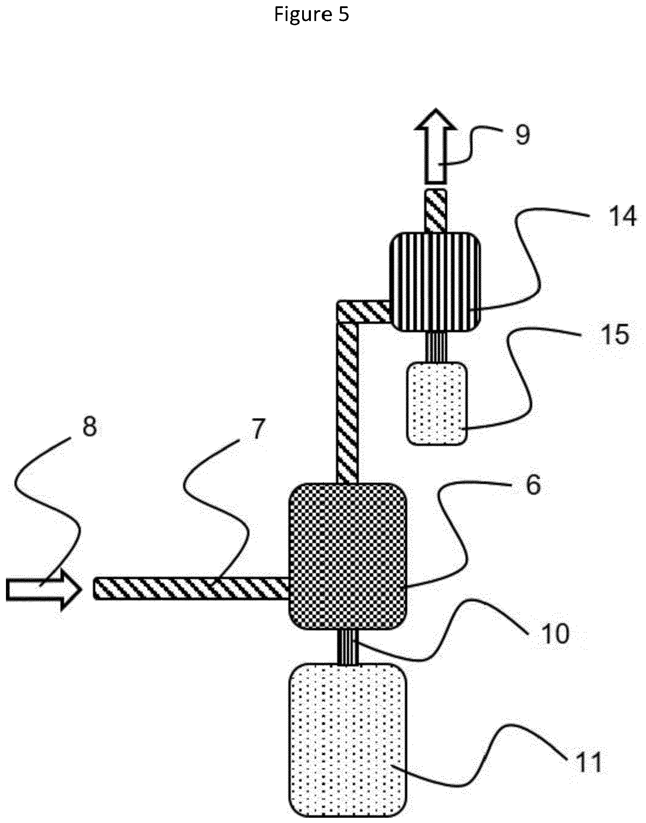

In another case, as shown in Figure 5, the monolithic catalysts system **6** for the reduction of $SO_2$ can be in contact flow with a cyclone-type removal system 14, installed in the flue gas stream **7** upstream of the monolithic catalysts system **6,** which is in contact flow with solids collection vessel **15** in a such way that the reduction of at least 90% of the solids present in the flue gas stream **7** is possible.

**Device for $SO_2$ reduction from gas flue stream**

The above system can be a device for $SO_2$ reduction 6 when being installed in a hot flow (>200°C) having reactors' velocities in the ranges of $10^3$ to $2.10^5$ h$^{-1}$ or in a part flow (1-99%) exhaust gases of internal combustion engine, which use sulfur containing fuel in vehicles, watercraft, power generation machinery or system or from industrial processes exhaust gases.

The installation of the device for the reduction of $SO_2$ **6** can be installed on the metallic flue gas stream pipeline handling **7** of the internal combustion engine, which has an inlet gas **8** deriving from the engine or the industrial process and an outlet **9**. Furthermore, the $SO_2$ reduction device **6** is connected to a vessel in which it will flow under the influence of gravity and the produced liquid elemental sulfur will be stored, which will be solidified.

The combination of $SO_2$ reduction device **6** with a carbon nanoparticle filter **12** for the simultaneous reduction of any carbon nanoparticles in the flue gas stream is possible to be made with the installation of the carbon nanoparticle filter **12** in the flue gas stream **7** upstream of $SO_2$ reduction device **6.**

In the case that carbon nanoparticles are involved in the reduction process of $SO_2$ to the formation of elemental sulfur or other related products, the installation of the carbon nanoparticle filter **12** can be made on the flue gas stream pipeline **7** downstream of the $SO_2$ reduction device **6** for the collection of any carbon nanoparticles that have not reacted.

The combination of $SO_2$ reduction device **6** with a removal oxygen device **13** for the reduction of $O_2$ in the flue gas stream and for the improvement of the efficiency of $SO_2$ reduction device **6,** is possible to be accomplished with the installation of the oxygen removal device **13** in the flue gas stream **7** upstream of the $SO_2$ reduction device **6.**

In addition, in case the production of solid products during the reduction reaction of $SO_2$, which can be carried away by the flue gas stream, the installation of a cyclone-type solid removal system **14** in the flue gas stream **7** downstream of the $SO_2$ reduction device **6** is recommended, so that the reduction of solids existing in the flue gas stream **7** to be possible by at least 90%. The solid removal system **14** is in contact flow with a collecting vessel of solids **15**.

**$SO_2$ reduction process from flue gas stream**

$SO_2$ reacts with CO, hydrocarbons and NO that are present simultaneously in the flue gas stream on the surface of a monolithic catalyst containing a supported catalyst with ceramic oxygen ion conductor for the formation of elemental sulfur. The corresponding chemical reactions are presented below:

$$SO_2(g) + 2CO(g) \rightarrow \frac{1}{2}S_2(l) + 2CO_2(g) \tag{1}$$

$$SO_2(g) + \frac{1}{2}CH_4(g) \rightarrow \frac{1}{2}S_2(l) + \frac{1}{2}CO_2(g) + H_2O(g) \tag{2}$$

$$SO_2(g) + CH_4(g) + 2NO(g) \rightarrow \frac{1}{2}S_2(l) + CO_2(g) + 2H_2O(g) + N_2(g) \tag{3}$$

**In the drawings:**

**Figure 1:** Schematic representation of the $SO_2$ reduction system applying two cylindrical monolithic catalysts.

**Figure 2:** $SO_2$ reduction system **6** in flow contact with a vessel storage of the produced sulfur **11**.

**Figure 3:** $SO_2$ reduction system **6** in flow contact with a carbon nanoparticle filter **12**.

**Figure 4:** $SO_2$ reduction system **6** in flow contact with oxygen discharge system **13**.

**Figure 5:** $SO_2$ reduction system **6** in flow contact with a solids discharge system **14** and a solid vessel storage **15**.

**Literature** I. Onal, Lead tolerant catalyst for treatment exhaust gas in the presence of $SO_2$, US 4, 650, 782 (1987).

1. J.G. Davidson, Cleaning stack gas, US 8, 821, 818 B1 (2014).
2. A.B. Stiles, Process for reduction of $SO_2$, US 3, 755, 550 (1973).
3. F.C. Palilla, Catalytic process for removing sulfur dioxide from gas streams, US 3, 931, 393 (1976).

4. Ming Fang., Jian-Xin Ma, Catalytic removal of sulfur dioxide from flue gas, US 5, 853, 684 (1998)

**Claims**

1. A method for the abatement of sulfur dioxide ($SO_2$) in flue gas stream of internal combustion engines that use high sulfur content fuel in vehicle, watercraft, power generation machinery or system or exhaust gases from industrial processes, using catalytic converters in contact flow with the flue gas stream, which contains at least $SO_2$ with concentration range from 0.0001% to 1% by volume and CO with concentration range from 0.0001% to 1% by volume and hydrocarbons with concentration range from 0.0001% to 1% by volume and NOx with concentration range from 0.0001% to 1% by volume, of which part or all of the $SO_2$ is converted to liquid elemental sulfur after its chemical reaction with CO on catalytic converters in temperature values higher than 200°C to the production of $CO_2$ or/and with hydrocarbons to the production of $CO_2$ and $H_2O$, or/and with hydrocarbons and $NO_x$ to the production of $CO_2$, $H_2O$ and $N_2$.

2. A method for the abatement of sulfur dioxide ($SO_2$) in flue gas stream of internal combustion engines that use high sulfur content fuel in vehicle, watercraft, power generation machinery or system or exhaust gases from industrial processes, using catalytic converters according to claim 1, where catalytic converter is consisted of one or two ore more catalytic monoliths (1) installed in a row and hermetically sealed inside a metallic structure (2) for the exhaust flow handling, and each catalytic monolith (1) is consisted of heterogeneous catalyst deposited on an non-flammable monolithic ceramic matrix made of one, two or more oxides selected from the oxide list of magnesium (Mg), aluminum (Al), silicon (Si), iron (Fe), zirconia (Zr), cerium (Ce), yttrium (Y), lanthanum (La), titanium (Ti), gadolinium (Gd), manganese (Mn), and niobium (Nb) or metallic matrix made of one, two or more materials selected from the list: steel, stainless steel, titanium or any other similar material, and the heterogeneous catalyst is consisted of the metallic phase at a rate between 0.5% to 20% by weight, consisting of at least one metal or/and its sulfate form selected from the list: copper (Cu), iron (Fe), molybdenum (Mo), cobalt (Co), rhodium (Rh), iridium (Ir), ruthenium (Ru), palladium (Pd), nickel (Ni), tungsten (W), vanadium (V), tin (Sn), zinc (Zn), antimony (Sb) and manganese (Mn), which is immobilized on the surface of porous ceramic phase $CeO_2$, enhanced, stabilized, combined or mixed with at least one of the oxides of Y, Pr, Sr, Sc, La, Ti, Zr, Gd, Nb, V, Sm, Nd or/and Tb.

3. A device for the abatement of sulfur dioxide ($SO_2$) in flue gas stream of internal combustion engines that use high sulfur content fuel in vehicle, watercraft, power generation machinery or system or exhaust gases from industrial processes, **characterized by** the fact that it is consisted of one, two or more monolithic catalysts (1) installed in a row and hermetically sealed inside a metallic structure (2) for the exhaust flow handling, with exhaust inlet stream (3), which contains at least $SO_2$ with concentration range from 0.0001% to 1% by volume and CO with concentration range from 0.0001% to 1% by volume and hydrocarbons with concentration range from 0.0001% to 1 % by volume and $NO_x$ with concentration range from 0.0001% to 1 % by volume, and exhaust outlet stream (4) which contains $SO_2$, CO, hydrocarbons and $NO_x$ in concentration ranges smaller than the concentration ranges of the exhaust inlet stream or in zero amounts, and part of draining and flowing of the produced liquid elemental sulfur.

4. A procedure for the abatement of sulfur dioxide ($SO_2$) in flue gas stream of internal combustion engines that use high sulfur content fuel in vehicle, watercraft, power generation machinery or system or exhaust gases from industrial processes, according to which the device for the abatement of $SO_2$ (6) is installed on the flue gas pipeline (7) with exhaust inlet stream (8) where the $SO_2$ is converted to elemental sulfur when it comes in contact with the sulfur dioxide abatement device (6) to the production of exhaust outlet stream (9) with concentration ranges of $SO_2$, CO, hydrocarbons and $NO_x$ less than the concentration ranges of the exhaust inlet stream or in zero amounts, and elemental sulfur stream flowing from the output (10).

5. A procedure for the abatement of sulfur dioxide ($SO_2$) in flue gas stream of internal combustion engines that use high sulfur content fuel in vehicle, watercraft, power generation machinery or system or exhaust gases from industrial processes, according to claim 4, where the sulfur dioxide abatement device (6) is installed on the flue gas pipeline (7) and is in contact flow with a vessel (11) for the collection, cooling and storing of the produced elemental sulfur.

6. A procedure for the abatement of sulfur dioxide ($SO_2$) in flue gas stream of internal combustion engines that use high sulfur content fuel in vehicle, watercraft, power generation machinery or system or exhaust gases from industrial processes, according to claim 4, which contains an additional carbon nanoparticle filter (12), self-regenerating or not, which is placed at the flue gas pipeline (7) in upstream or downstream contact flow to the sulfur dioxide abatement device (6), which is possible to combine an oxidative catalyst with the carbon nanoparticle filter.

7. A procedure for the abatement of sulfur dioxide ($SO_2$) in flue gas stream of internal combustion engines that use high sulfur content fuel in vehicle, watercraft, power generation machinery or system or exhaust gases from industrial processes, according to claim 4, which contains an additional oxygen removal system (13) installed on the flue gas pipeline (7) in upstream contact flow to the sulfur dioxide abatement device (6) and is possible to reduce the oxygen concentration in the exhaust gasses.

8. A procedure for the abatement of sulfur dioxide ($SO_2$) in flue gas stream of internal combustion engines that use high sulfur content fuel in vehicle, watercraft, power generation machinery or system or exhaust gases from industrial processes, according to claim 4, which contains an additional cyclone-type centrifugal system (14) with a solids collection vessel (15), for the removal of leaked sulfur, installed on the flue gas pipeline (7) in upstream contact flow to the sulfur dioxide abatement device (6).

Figure 1

Figure 2

Figure 3

Figure 4

Figure 5

Europäisches
Patentamt

European
Patent Office

Office européen
des brevets

# EUROPEAN SEARCH REPORT

Application Number

EP 21 02 0365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 947 234 A1 (UNIV HONG KONG SCIENCE & TECHN [HK]) 6 October 1999 (1999-10-06) * paragraphs [0012], [0013], [0017], [0019] - [0026], [0034] * * figure 1 * * example 1 * * claims 1,16 * | 1,3-5,7 | INV. B01D53/86 B01D53/94 B01J23/10 F01N3/10 |
| X | US 3 931 390 A (PALILLA FRANK C ET AL) 6 January 1976 (1976-01-06) * column 2, line 50 - column 3, line 19 * * column 3, line 57 - column 4, line 19 * * column 4, lines 53-68 * * column 6, lines 20-26 * * figure 1 * | 1,3-7 | |
| X | US 5 242 673 A (FLYTZANI-STEPHANOPOULOS MARIA [US] ET AL) 7 September 1993 (1993-09-07) * column 2, lines 17-31 * * column 3, lines 39-51 * * column 4, line 39 - column 5, line 47 * | 1-5,7 | TECHNICAL FIELDS SEARCHED (IPC) |
| X | US 5 176 888 A (STILES ALVIN B [US]) 5 January 1993 (1993-01-05) * column 2, lines 40-65 * * claims 1,3 * | 1,3-5,7,8 | B01D F01N B01J |

-/--

The present search report has been drawn up for all claims

| Place of search | Date of completion of the search | Examiner |
|---|---|---|
| The Hague | 18 November 2021 | Hackenberg, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 02 0365

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Flytzani-Stephanopoulos Maria ET AL: "Ceria-based catalysts for the recovery of elemental sulfur from SO 2 -laden gas streams", Catalysis Today, 1 January 2000 (2000-01-01), pages 145-158, XP055863136, Retrieved from the Internet: URL:https://www.sciencedirect.com/science/article/pii/S0920586100004168/pdfft?md5=95f27f0fb3e3f8268068bd05e48a633d&pid=1-s2.0-S0920586100004168-main.pdf [retrieved on 2021-11-18] * the whole document * | 1-5 | |

-----

TECHNICAL FIELDS
SEARCHED      (IPC)

The present search report has been drawn up for all claims

| Place of search | Date of completion of the search | Examiner |
|---|---|---|
| The Hague | 18 November 2021 | Hackenberg, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 02 0365

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2021

| Patent document cited in search report | | Publication date | Patent family member(s) | | Publication date |
|---|---|---|---|---|---|
| EP 0947234 | A1 | 06-10-1999 | EP<br>US | 0947234 A1<br>5853684 A | 06-10-1999<br>29-12-1998 |
| US 3931390 | A | 06-01-1976 | NONE | | |
| US 5242673 | A | 07-09-1993 | NONE | | |
| US 5176888 | A | 05-01-1993 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4650782 A
- US 8821818 B1
- US 3755550 A
- US 3931393 A
- US 5853684 A